# EUROPÄISCHE PATENTSCHRIFT

(11) **EP 3 472 019 B1**
(45) Veröffentlichungstag und Bekanntmachung des Hinweises auf die Patenterteilung: **01.12.2021**
(21) Anmeldenummer: 17735501.3
(22) Anmeldetag: 04.07.2017
(51) Int. Cl.: B61D 19/00, B61D 19/02

(54) **FAHRZEUG MIT EINEM TÜRPORTAL UND EINEM PORTALDICHTRAHMEN**
VEHICLE HAVING A DOOR PORTAL AND A PORTAL SEALING FRAME
VÉHICULE COMPRENANT UN PORTAIL DE PORTE ET UN CADRE D'ÉTANCHÉITÉ DE PORTAIL

(30) Priorität: 17.08.2016 DE 102016215376
(43) Veröffentlichungstag der Anmeldung: 24.04.2019
(73) Patentinhaber: Siemens Mobility GmbH, 81739 München (DE)
(72) Erfinder: KRÜGER, Axel, 47799 Krefeld (DE)
(86) Internationale Anmeldenummer: PCT/EP2017/066615
(87) Internationale Veröffentlichungsnummer: WO 2018/033290

(56) Entgegenhaltungen:
- CN-U- 202 264 783
- CN-Y- 2 487 585
- CN-Y- 2 528 672
- CN-Y- 201 428 358
- DE-A1-102008 027 993
- DE-A1-102010 011 568
- DE-U1- 9 408 079
- DE-U1-202007 008 782

## Beschreibung

Die Erfindung betrifft ein Fahrzeug, welches ein Türportal sowie einen mit dem Türportal verbundenen Portaldichtrahmen umfasst, der mehrere miteinander verbundene Seitenteile aufweist.

Es ist bekannt, bei einem Fahrzeug, welches ein Türportal aufweist, einen Portaldichtrahmen (auch kurz "Portalrahmen" genannt) am Türportal zu befestigen, um die Dichtigkeit einer Einstiegstür des Fahrzeugs gegenüber dem Türportal gewährleisten zu können. Der Portaldichtrahmen stellt eine Dichtfläche dar, an der eine Dichtung anliegen kann, welche zum Abdichten der Einstiegstür gegenüber dem Türportal eingesetzt wird.

Die Druckschrift CN 2487585 Y betrifft eine Tür, die einen Rahmen aus Aluminiumprofilen mit Ausnehmungen aufweist. In die Ausnehmungen sind Dichtungsstreifen zur Abdichtung der Tür gegen den Türrahmen eingeklebt.

Die Gebrauchsmusterschrift DE 20 2007 008 782 U1 lehrt eine Fahrgasttür für ein Fahrzeug des öffentlichen Personenverkehrs. Diese weist ein Dichtelement auf, welches vertikal entlang einer Schließkante der Fahrgasttür verläuft und welches in der geschlossenen Stellung der Tür an einer am Türportal angeordnete Abdichtleiste anliegt.

Eine Aufgabe der Erfindung ist es, bei einem Fahrzeug der eingangs genannten Art eine verbesserte Dichtigkeit an dessen Türportal zu erreichen.

Diese Aufgabe wird erfindungsgemäß gelöst durch ein Fahrzeug mit den Merkmalen des Anspruchs 1.

Das erfindungsgemäße Fahrzeug umfasst ein Türportal sowie einen mit dem Türportal verbundenen Portaldichtrahmen, der mehrere miteinander verbundene Seitenteile aufweist. Ferner ist bei dem erfindungsgemäßen Fahrzeug mindestens eins der Seitenteile des Portaldichtrahmens mittels einer Klebeverbindung mit dem Türportal verbunden, und jedes der Seitenteile weist mehrere Aussparungen zur Verringerung seiner Steifigkeit auf.

Die Erfindung geht von der Überlegung aus, dass das Türportal produktionsbedingte Toleranzen, d.h. Abweichungen von seiner Soll-Form, aufweisen kann. Beispielsweise kann das Türportal (lokale) Unebenheiten aufweisen.

Weiter geht die Erfindung von der Überlegung aus, dass bisher der Portaldichtrahmen mithilfe von Schrauben am Türportal befestigt wird. Beim Anziehen der Schrauben können Winkelfehler von Anschraubflächen des Türportals auf den Portaldichtrahmen übertragen werden. Dies kann zu Undichtigkeiten am Türportal führen.

Dadurch, dass bei der Erfindung mindestens eins der Seitenteile des Portaldichtrahmens mittels einer Klebeverbindung mit dem Türportal verbunden ist, kann auf Schraubverbindungen, welche dieses Seitenteil des Portaldichtrahmens mit dem Türportal verbinden, verzichtet werden. Hierdurch wiederum kann eine Übertragung von Winkelfehlern auf den Portaldichtrahmen, die beim Anziehen von Schrauben entstehen kann, sowie daraus resultierende Undichtigkeiten an diesem Seitenteil des Portaldichtrahmens vermieden werden.

Unter einem Seitenteil des Portaldichtrahmens kann vorliegend ein (Teil-)Abschnitt des Portaldichtrahmens verstanden werden.

Bei dem Fahrzeug kann es sich insbesondere um ein im Personenverkehr eingesetztes Fahrzeug handeln. In bevorzugter Weise ist das Fahrzeug ein Schienenfahrzeug. Alternativ kann das Fahrzeug zum Beispiel ein Omnibus sein.

Zweckmäßigerweise ist das Türportal ein Teil eines Wagenkastens des Fahrzeugs. Der Wagenkasten des Fahrzeugs kann ein oder mehrere Türportale aufweisen. Weiterhin kann das Fahrzeug für jedes Türportal des Wagenkastens einen eigenen Portaldichtrahmen aufweisen. Nachfolgend bezieht sich die Beschreibung der Einfachheit halber auf das zuvor erwähnte Türportal sowie auf den zuvor erwähnten Portaldichtrahmen. Etwaige weitere Türportale und Portaldichtrahmen des Fahrzeugs können in gleicher Weise wie dieses Türportal und dieser Portaldichtrahmen ausgeführt sein.

Vorteilhafterweise ist das besagte Seitenteil des Portaldichtrahmens, welches mittels einer Klebeverbindung mit dem Türportal verbunden ist, ausschließlich mittels der Klebeverbindung mit dem Türportal verbunden. Mit anderen Worten, dieses Seitenteil ist vorteilhafterweise nicht mittels einer anderen Art von Verbindung, wie zum Beispiel einer Schraubverbindung, am Türportal befestigt. Durch den Verzicht auf (komplexe) Schraubverbindungen kann der Portaldichtrahmen kostengünstig hergestellt werden.

In einer besonders vorteilhaften Ausgestaltung der Erfindung ist jedes der Seitenteile des Portaldichtrahmens mittels einer Klebeverbindung, insbesondere ausschließlich mittels einer Klebeverbindung, mit dem Türportal verbunden. Dadurch kann an allen Seitenteilen des Portaldichtrahmens auf Schraubverbindungen zur Befestigung des Portaldichtrahmens am Türportal verzichtet werden.

Vorzugsweise weist der Portaldichtrahmen zwei Längsseitenteile auf. Weiter ist es vorteilhaft, wenn der Portaldichtrahmen mindestens ein Schmalseitenteil aufweist. Zweckmäßigerweise ist das Schmalseitenteil mit den Längsseitenteilen verbunden. Insbesondere kann das Schmalseitenteil unmittelbar mit den beiden Längsseitenteilen verbunden sein.

Ferner ist es vorteilhaft, wenn beide Längsseitenteile zumindest im Wesentlichen gleich lang sind. Die Länge der Längsseitenteile definiert zweckmäßigerweise die Höhe des Portaldichtrahmens. Die Länge des Schmalseitenteils wiederum definiert zweckmäßigerweise die Breite des Portaldichtrahmens. Sinnvollerweise sind die Längsseitenteile länger als das Schmalseitenteil ausgeführt.

Des Weiteren ist es zweckmäßig, wenn das Schmalseitenteil an einem seiner beiden Enden mit einem der beiden Längsseitenteile verbunden ist. An dem anderen seiner beiden Enden ist das Schmalseitenteil zweckmäßigerweise mit dem anderen der beiden Längsseitenteile verbunden.

Außerdem kann der Portaldichtrahmen ein weiteres Schmalseitenteil umfassen. In diesem Fall kann jedes der beiden Schmalseitenteile an einem seiner beiden Enden mit einem der beiden Längsseitenteile und mit dem anderen seiner beiden Ende mit dem anderen der beiden Längsseitenteile verbunden sein. In bevorzugter Weise ist das weitere Schmalseitenteil zumindest im Wesentlichen gleich lang wie das erstgenannte Schmalseitenteil.

Bei den beiden Längsseitenteilen und dem/den Schmalseitenteil/-en handelt es sich sinnvollerweise um die eingangs genannten Seitenteile des Portaldichtrahmens.

Die Längsseitenteile und das/die Schmalseitenteil/-e können als separate Bauteile des Portaldichtrahmens ausgebildet sein. In diesem Fall können die Längsseitenteile beispielsweise kraftschlüssig, insbesondere mittels Schraub-, Klebe- und/oder Nietverbindungen, mit dem/den Schmalseitenteil/-en verbunden sein. Alternativ kann vorgesehen sein, dass das/die Schmalseitenteil/-e einstückig mit den Längsseitenteilen ausgebildet ist/sind. Mit anderen Worten, der gesamte Portaldichtrahmen kann in einem Stück gefertigt sein, beispielsweise mithilfe eines 3D-Druckverfahrens.

Vorzugsweise bestehen die Seitenteile des Portaldichtrahmens zumindest überwiegend aus Metall, insbesondere aus Aluminium.

Besonders bevorzugt ist es, wenn die Seitenteile ausschließlich aus Metall bestehen. Vorliegend ist der Begriff "Metall" nicht notwendigerweise als ein einzelnes Metall zu verstehen, sondern kann auch eine Metalllegierung umfassen.

Weiter ist es vorteilhaft, wenn alle Seitenteile des Portaldichtrahmens aus demselben Material bzw. derselben Materialkombination bestehen. Hierdurch kann erreicht werden, dass die Seitenteile gleiche Materialeigenschaften, insbesondere die gleiche Biege- und/oder Torsionssteifigkeit, aufweisen.

In einer vorteilhaften Ausgestaltung der Erfindung sind die Seitenteile des Portaldichtrahmens jeweils als Profilbauteil, insbesondere als Strangpressprofil, oder als Blechkantteil ausgebildet. Solche Bauteile sind kosten- und aufwandsgünstig herstellbar und ermöglichen somit eine kosten- und aufwandsgünstige Herstellung des Portaldichtrahmens.

Eine bevorzugte Weiterbildung der Erfindung sieht vor, dass die Seitenteile des Portaldichtrahmens jeweils eine Befestigungsleiste aufweisen. Weiter ist es vorteilhaft, wenn die Seitenteile des Portaldichtrahmens jeweils eine Dichtleiste aufweisen, welche zweckmäßigerweise mit der Befestigungsleiste desselben Seitenteils verbunden ist. Insbesondere kann die Befestigungsleiste des jeweiligen Seitenteils einstückig mit dessen Dichtleiste ausgebildet sein.

Zweckmäßigerweise ist jedes der Seitenteile des Portaldichtrahmens an seiner Befestigungsleiste mit dem Türportal verbunden. Zudem ist es bevorzugt, wenn die Dichtleiste des jeweiligen Seitenteils senkrecht oder im Wesentlichen senkrecht zu dessen Befestigungsleiste angeordnet ist.

Ferner weisen die Seitenteile des Portaldichtrahmens vorzugsweise jeweils eine L-förmige oder eine T-förmige Querschnittsform auf. Des Weiteren ist es zweckmäßig, wenn die Seitenteile des Portaldichtrahmens eine Wandungsdicke von höchstens 5 mm, insbesondere höchstens 3 mm, aufweisen.

Dadurch kann erreicht werden, dass der Portaldichtrahmen eine geringe Steifigkeit, insbesondere eine geringe Biege- und/oder Torsionssteifigkeit, aufweist.

Erfindungsgemäß weist mindestens eins der Seitenteile mehrere Aussparungen zur Verringerung seiner Steifigkeit auf. Das funktionale Merkmal "zur Verringerung seiner Steifigkeit" kann dahingehend verstanden werden, dass das Seitenteil Aussparungen aufweist, die dessen Steifigkeit, insbesondere dessen Biege- und/oder Torsionssteifigkeit, verringern - verglichen mit einem Seitenteil, welches keine solchen Aussparungen aufweist, aber ansonsten identisch ausgebildet ist.

Üblicherweise wird eine Montagelehre eingesetzt, um den Portaldichtrahmen am Türportal zu befestigen. Mithilfe der Montagelehre lässt sich die Ebenheit und Konturtreue des Portaldichtrahmens prüfen und dessen korrekte Einbauposition bezüglich des Türportals bestimmen.

Eine geringe Steifigkeit des jeweiligen Seitenteils des Portaldichtrahmens ermöglicht es, das Seitenteil aufwandsgünstig - insbesondere ohne aufwändiges Nachrichten von Hand - an die Form der Montagelehre anzupassen, sodass etwaige durch Konturabweichungen zwischen dem Seitenteil des Portaldichtrahmens und der Montagelehre bedingte Undichtigkeiten vermieden werden.

Besonders bevorzugt ist es, wenn jedes der Seitenteile mehrere Aussparungen zur Verringerung seiner Steifigkeit aufweist. Dadurch kann der gesamte Portaldichtrahmen aufwandsgünstig an die Form der Montagelehre angepasst werden.

Vorzugsweise sind die Aussparungen des jeweiligen Seitenteils als Schlitze ausgebildet. Weiter ist es bevorzugt, wenn die Aussparungen des jeweiligen Seitenteils in dessen Befestigungsleiste vorgesehen sind. Die Aussparungen können insbesondere derart in der jeweiligen Befestigungsleiste angeordnet sein, dass die jeweilige Befestigungsleiste eine kammartige Struktur ausbildet.

Ferner können die Aussparungen des jeweiligen Seitenteils in dessen Längsrichtung nebeneinander angeordnet sein. Weiterhin können die Aussparungen des jeweiligen Seitenteils äquidistant zueinander oder mit verschiedenen Abständen zueinander angeordnet sein.

Zweckmäßigerweise ist das Fahrzeug mit einer Einstiegstür ausgestattet. Die Einstiegstür wiederum weist zweckmäßigerweise mindestens einen Türflügel auf. Weiter ist es vorteilhaft, wenn die Einstiegstür mindestens ein an dem Türflügel befestigtes Dichtungselement mit einer Dichtlippe aufweist. Das Dichtungselement dient zweckmäßigerweise dazu, die Einstiegstür gegenüber dem Türportal bzw. dem am Türportal befestigten Portaldichtrahmen abzudichten. Vorzugsweise besteht das Dichtungselement zumindest überwiegend aus einem Elastomer, wie zum Beispiel Gummi.

Im geschlossenen Zustand der Einstiegstür liegt die Dichtlippe vorteilhafterweise zumindest abschnittsweise am Portaldichtrahmen, insbesondere an der Dichtfläche eines der Seitenteile des Portaldichtrahmens, an. Im geöffneten Zustand der Einstiegstür ist die Dichtlippe vorzugsweise vom Portaldichtrahmen beabstandet, also kontaktlos zum Portaldichtrahmen angeordnet.

Besonders bevorzugt ist es, wenn die Einstiegstür als Schwenkschiebetür ausgebildet ist.

Des Weiteren betrifft die Erfindung ein Verfahren zum Befestigen eines Portaldichtrahmens an einem Türportal eines Fahrzeugs, bei dem der Portaldichtrahmen mehrere miteinander verbundene Seitenteile aufweist.

Bei dem erfindungsgemäßen Verfahren ist vorgesehen, dass mindestens eins der Seitenteile des Portaldichtrahmens mittels einer Klebeverbindung mit dem Türportal verbunden wird, wobei jedes der Seitenteile mehrere Aussparungen zur Verringerung seiner Steifigkeit aufweist. Auf diese Weise kann besagtes Seitenteil des Portaldichtrahmens aufwandsgünstig mit dem Türportal verbunden werden. Insbesondere kann auf ein aufwändiges Anziehen von Schrauben und auf ein etwaiges Nachrichten des Seitenteils verzichtet werden.

Eine vorteilhafte Weiterbildung des Verfahrens sieht vor, dass jedes der Seitenteile des Portaldichtrahmens mittels einer Klebeverbindung, insbesondere ausschließlich mittels einer Klebeverbindung, mit dem Türportal verbunden wird. Dadurch können alle Seitenteile des Portaldichtrahmens aufwandsgünstig am Türportal befestigt werden.

Zweckmäßigerweise wird der Portaldichtrahmen, bevor er mit dem Türportal verbunden wird, an einer Montagelehre fixiert, beispielsweise mithilfe von Schnellspannelementen. Anschließend wird die Montagelehre zweckmäßigerweise zusammen mit dem Portaldichtrahmen in das Türportal eingesetzt.

Die bisher gegebene Beschreibung vorteilhafter Ausgestaltungen der Erfindung enthält zahlreiche Merkmale, die in den einzelnen abhängigen Ansprüchen teilweise zu mehreren zusammengefasst wiedergegeben sind. Diese Merkmale können jedoch zweckmäßigerweise auch einzeln betrachtet und zu sinnvollen weiteren Kombinationen im Rahmen der Ansprüche zusammengefasst werden. Insbesondere sind diese Merkmale jeweils einzeln und in beliebiger geeigneter Kombination mit dem erfindungsgemäßen Fahrzeug und dem erfindungsgemäßen Verfahren im Rahmen der Ansprüche kombinierbar. So sind Verfahrensmerkmale auch als Eigenschaft der entsprechenden Vorrichtungseinheit zu sehen und umgekehrt.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit den Zeichnungen näher erläutert werden. Die Ausführungsbeispiele dienen der Erläuterung der Erfindung und beschränken die Erfindung nicht auf die darin angegebenen Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1: ein Schienenfahrzeug, welches eine Einstiegstür mit einem Türflügel umfasst;
- FIG 2: einen Schnitt durch den Türflügel der Einstiegstür sowie durch ein Türportal und einen Portaldichtrahmen des Schienenfahrzeugs aus FIG 1;
- FIG 3: den Portaldichtrahmen des Schienenfahrzeugs aus FIG 1 in einer Frontalansicht;
- FIG 4: ein weiteres Schienenfahrzeug, welches eine Einstiegstür mit einem Türflügel sowie einen Schiebetritt umfasst; und
- FIG 5: einen Portaldichtrahmen des Schienenfahrzeugs aus FIG 4.

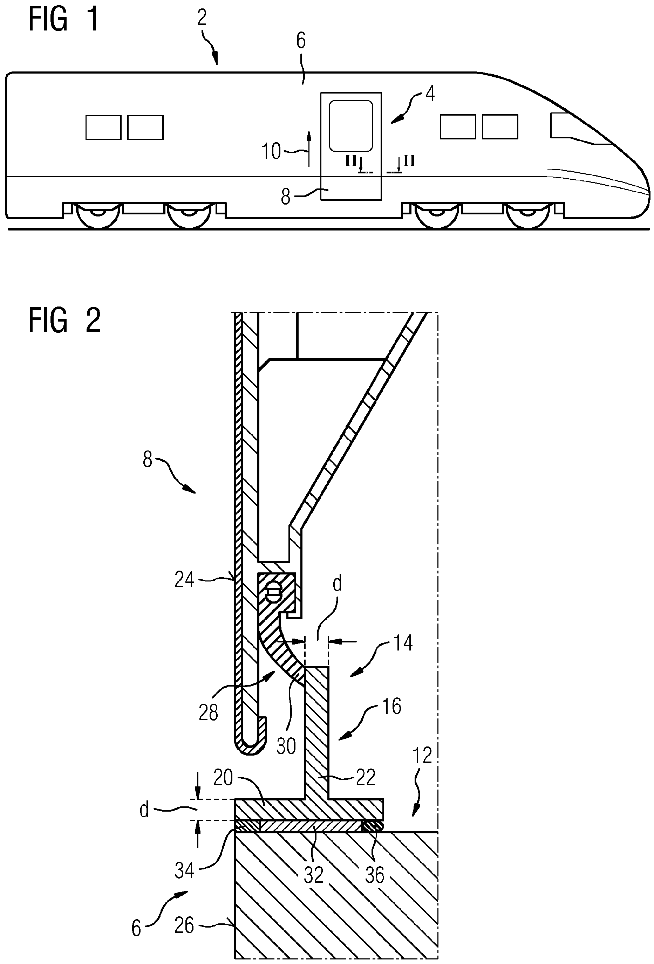

FIG 1 zeigt ein Schienenfahrzeug 2 in einer schematischen Darstellung. In dieser Figur ist exemplarisch eine Einstiegstür 4 des Schienenfahrzeugs 2 sowie dessen Wagenkasten 6 abgebildet. Das Schienenfahrzeug 2 kann zusätzlich zu der abgebildeten Einstiegstür 4 eine oder mehrere weitere Einstiegstüren aufweisen, welche einer besseren Übersichtlichkeit halber figürlich nicht dargestellt sind.

Die nachfolgende Beschreibung bezieht sich der Einfachheit halber auf die abgebildete Einstiegstür 4, wobei die nachfolgenden Ausführungen ebenso für die anderen, figürlich nicht dargestellten Einstiegstüren des Schienenfahrzeugs 2 gelten können.

Die Einstiegstür 4 des Schienenfahrzeugs 2 umfasst einen Türflügel 8 und ist als Schwenkschiebetür ausgebildet. In FIG 1 ist die Einstiegstür 4 im geschlossenen Zustand abgebildet und deren Längsrichtung 10 in Form eines Pfeils dargestellt.

Weiter ist in FIG 1 eine Schnittebene II-II dargestellt, welche senkrecht zur Längsrichtung 10 der Einstiegstür 4 durch einen Abschnitt des Türflügels 8 sowie durch einen Abschnitt des Wagenkastens 6 verläuft.

FIG 2 zeigt einen Schnitt durch einen Abschnitt des Türflügels 8 sowie durch einen Abschnitt des Wagenkastens 6 entlang der Schnittebene II-II aus FIG 1.

Aus FIG 2 ist ersichtlich, dass der Wagenkasten 6 ein Türportal 12 aufweist. Weiter ist in FIG 2 ein Portaldichtrahmen 14 des Schienenfahrzeugs 2, genauer gesagt ein Längsseitenteil 16 des Portaldichtrahmens 14, abgebildet.

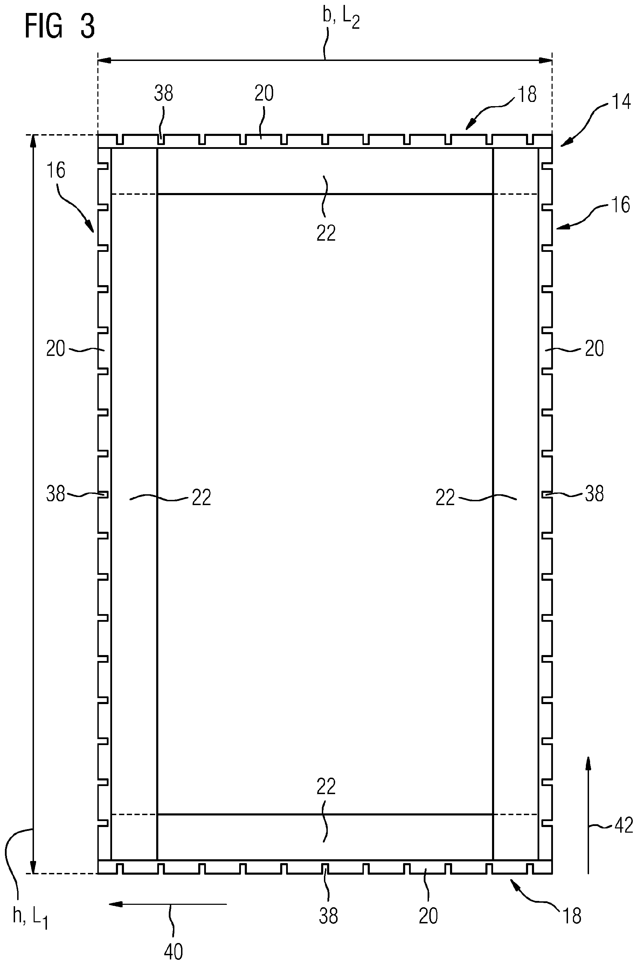

Der Portaldichtrahmen 14 umfasst zwei solche Längsseitenteile 16 sowie zwei mit den Längsseitenteilen 16 verbundene Schmalseitenteile 18, die jeweils als separate Bauteile ausgeführt sind, welche miteinander verbunden sind (vgl. FIG 3). Sowohl die Längsseitenteile 16 als auch die Schmalseitenteile 18 sind als Profilbauteile ausgebildet. Im vorliegenden Ausführungsbeispiel bestehen die Seitenteile 16, 18 des Portaldichtrahmens 14 jeweils aus Aluminium.

Jedes der Seitenteile 16, 18 des Portaldichtrahmens 14 ist ausschließlich mittels einer Klebeverbindung mit dem Türportal 12 verbunden. Schraubverbindungen, welche den Portaldichtrahmen 14 mit dem Türportal 12 verbinden, sind nicht vorgesehen.

Des Weiteren umfasst jedes der Seitenteile 16, 18 des Portaldichtrahmens 14 eine Befestigungsleiste 20 sowie eine einstückig mit der Befestigungsleiste 20 ausgebildete, senkrecht zur Befestigungsleiste 20 ausgerichtete Dichtleiste 22, wobei die Seitenteile 16, 18 des Portaldichtrahmens 14 an ihrer jeweiligen Befestigungsleiste 20 an das Türportal 14 geklebt sind. Ferner weisen die Seitenteile 16, 18 des Portaldichtrahmens 14 jeweils eine T-förmige Querschnittsform auf. Alternativ könnten die Seitenteile 16, 18 des Portaldichtrahmens 14 beispielsweise eine L-förmige Querschnittsform aufweisen.

Im vorliegenden Ausführungsbeispiel weist sowohl die Befestigungsleiste 20 als auch die Dichtleiste 22 des jeweiligen Seitenteils 16, 18 eine Wandungsdicke d von etwa 3 mm auf. Grundsätzlich können die Befestigungsleisten 20 eine andere Wandungsdicke als die Dichtleiste 24 aufweisen.

Wie zuvor erwähnt, ist die Einstiegstür 4 im geschlossenen Zustand dargestellt. In diesem Zustand ist ihre Außenseite 24 bündig zu einer Außenseite 26 des Wagenkastens 6 angeordnet.

Weiterhin ist in FIG 2 ein Dichtungselement 28 der Einstiegstür 4 dargestellt, welches an deren Türflügel 8 befestigt ist und dazu dient, die Einstiegstür 4 bzw. ihren Türflügel 8 gegenüber dem Portaldichtrahmen 14 abzudichten. Das Dichtungselement 28 besteht aus Gummi und weist eine Dichtlippe 30 auf. Im geschlossenen Zustand der Einstiegstür 4 liegt die Dichtlippe 30 des abgebildeten Dichtungselements 28 dichtend an der Dichtleiste 22 des abgebildeten Längsseitenteils 16 des Portaldichtrahmens 14 an.

Zusätzlich zu dem abgebildeten Dichtungselement 28 weist die Einstiegstür 4 mehrere weitere (figürlich nicht dargestellte) Dichtungselemente auf, die an ihrem Türflügel 8 befestigt sind. Die weiteren Dichtungselemente liegen im geschlossen Zustand der Einstiegstür 4 jeweils dichtend an einem der anderen Seitenteile 16, 18, insbesondere an deren Dichtleiste 22, an.

Des Weiteren ist ein Klebstoff 32, mittels welchem das jeweilige Seitenteil 16, 18 des Portaldichtrahmens 14 an das Türportal 12 geklebt ist, zur Außenseite 26 des Wagenkastens 6 hin mittels einer Versiegelungsmasse 34 versiegelt und zur gegenüberliegenden Seite hin mittels einer Dichtschnur 36 abgedichtet.

FIG 3 zeigt den Portaldichtrahmen 14 in einer Frontalansicht. In dieser Darstellung sind die beiden zuvor erwähnten Längsseitenteile 16 sowie die beiden Schmalseitenteile 18 des Portaldichtrahmens 14 sichtbar.

Beide Längsseitenteile 16 sind gleich lang ausgeführt. Ebenso sind beide Schmalseitenteile 18 gleich lang ausgeführt, wobei die Längsseitenteile 16 länger sind als die Schmalseitenteile 18.

Die Länge L₁ der Längsseitenteile 16 definiert die Höhe h des Portaldichtrahmens 14, während die Länge L₂ der Schmalseitenteile 18 die Breite b des Portaldichtrahmens 14 definiert.

In der dargestellten Frontalansicht hat der Portaldichtrahmen 14 eine rechteckige Grundform, wobei dessen Längsseitenteile 16 nicht notwendigerweise eben bezüglich der Zeichenebene der FIG 2 sein müssen, sondern eine Krümmung aufweisen können, die an eine etwaige Krümmung des Wagenkastens 6 im Bereich der Einstiegstür 4 angepasst ist.

Jedes der beiden Längsseitenteile 16 ist an einem seiner beiden Enden mit einem der beiden Schmalseitenteile 18 und mit dem anderen seiner beiden Enden mit dem anderen der beiden Schmalseitenteile 18 verbunden. Beispielsweise können die Längsseitenteile 16 mithilfe von Schraub-, Klebe- und/oder Nietverbindungen mit den Schmalseitenteilen 18 verbunden sein.

Des Weiteren weist jedes der Seitenteile 16, 18 des Portaldichtrahmens 14 mehrere Aussparungen 38 zur Verringerung seiner Steifigkeit auf, die als Schlitze ausgebildet sind. Zwecks einer besseren Darstellbarkeit sind die Aussparungen 38 in FIG 2 (im Vergleich zur Länge L₁ der Längsseitenteile 16 bzw. der Länge L₂ der Schmalseitenteile 18) vergrößert abgebildet.

Die Aussparungen 38 des Schmalseitenteils 18 sind in dessen Längsrichtung 40 nebeneinander angeordnet. In analoger Weise sind die Aussparungen 38 des Längsseitenteils 16 in dessen Längsrichtung 42 nebeneinander angeordnet. Ferner sind die Aussparungen 38 des jeweiligen Seitenteils 16, 18 in dessen Befestigungsleiste 20 vorgesehen, wobei die Aussparungen 38 derart in der jeweiligen Befestigungsleiste 20 angeordnet sind, dass die jeweilige Befestigungsleiste 20 eine kammartige Struktur ausbildet.

Die Schnittebene II-II aus FIG 1 verläuft zwischen zwei benachbarten Aussparungen 38 desjenigen Längsseitenteils 16, welches in FIG 3 rechts abgebildet ist.

Um den Portaldichtrahmens 14 in seiner vorgesehenen SollPosition am Türportal 12 befestigen zu können, wird der Portaldichtrahmen 14 an einer (figürlich nicht dargestellten) Montagelehre fixiert, beispielweise mithilfe von Schnellspannelementen. Anschließend wird die Montagelehre zusammen mit dem Portaldichtrahmen 14 in das Türportal 12 eingesetzt. Durch besagte Aussparungen 38 wird erreicht, dass der Portdichtrahmen 14 eine geringe Biege- und Torsionssteifigkeit aufweist, sodass sich der Portaldichtrahmen 14 (ohne großen Kraftaufwand) der Form der Montagelehre anpasst und sauber an der Montagelehre anliegt.

Bevor die Montagelehre mit dem Portaldichtrahmen 14 in das Türportal 12 eingesetzt wird, wird ein Klebstoff 32 auf die Befestigungsleisten 20 der Seitenteile 16, 18 und/oder auf das Türportal 20 aufgebracht. Mithilfe des Klebstoffs 32 werden die Seitenteile 16, 18 des Portaldichtrahmens 14 mit dem Türportal 12 verbunden. Im Weiteren wird der Klebstoff 32 von einer Seite mittels einer Versiegelungsmasse 34 versiegelt und von der gegenüberliegenden Seite mittels einer Dichtschnur 36 abgedichtet.

Die Beschreibung des nachfolgenden Ausführungsbeispiels beschränkt sich primär auf die Unterschiede zu dem vorhergehenden Ausführungsbeispiel, auf das bezüglich gleichbleibender Merkmale und Funktionen verwiesen wird. Im Wesentlichen gleiche bzw. einander entsprechende Elemente sind, soweit zweckdienlich, mit den gleichen Bezugszeichen bezeichnet und nicht erwähnte Merkmale sind im nachfolgenden Ausführungsbeispiel übernommen, ohne dass sie erneut beschrieben werden.

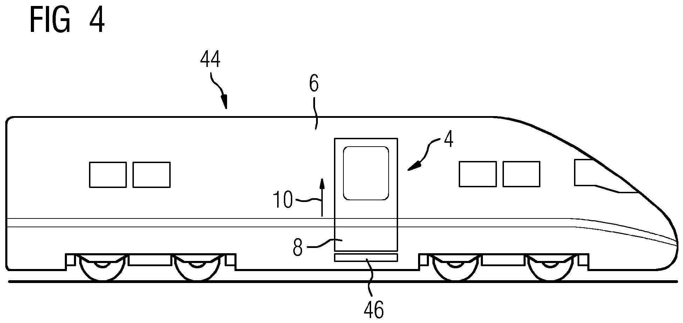

FIG 4 zeigt ein weiteres Schienenfahrzeug 44 in einer schematischen Darstellung. In dieser Figur ist exemplarisch eine Einstiegstür 4 des Schienenfahrzeugs 44 sowie dessen Wagenkasten 6 abgebildet.

Das Schienenfahrzeug 44 weist unterhalb der (dargestellten) Einstiegstür 4 einen Schiebetritt 46 auf. Der Schiebetritt 46 dient dazu, beim Ein- und Aussteigen von Fahrgästen einen Abstand zwischen dem Schienenfahrzeug 44 und einer Bahnsteigkante zu überbrücken. In FIG 4 ist der Schiebetritt 46 im eingefahrenen Zustand dargestellt.

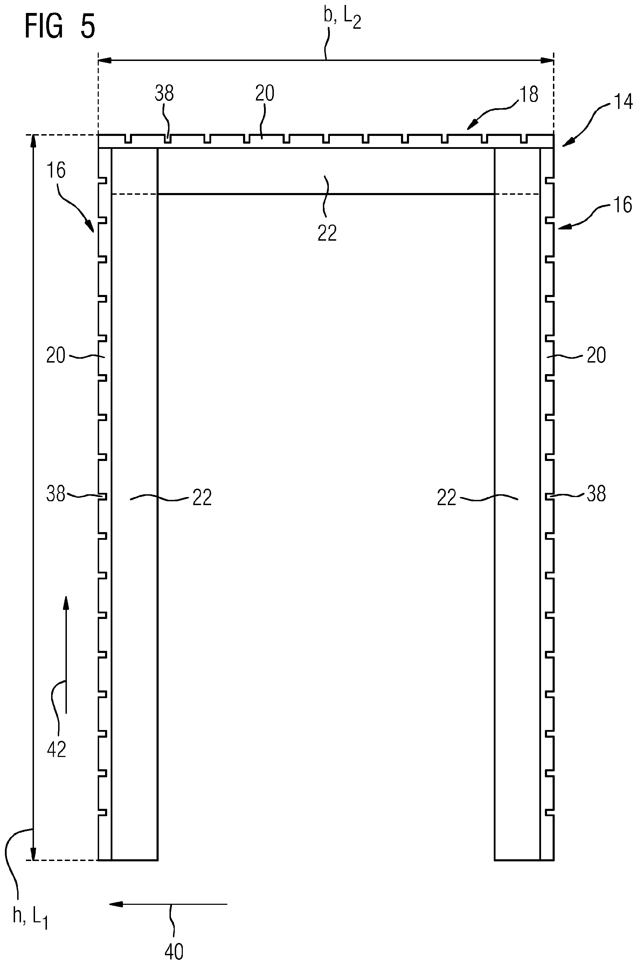

FIG 5 zeigt einen Portaldichtrahmen 14 des Schienenfahrzeugs 44 aus FIG 4 in einer Frontalansicht.

In der dargestellten Frontalansicht hat dieser Portaldichtrahmen 14 eine U-förmige Grundform, wobei dessen Längsseitenteile 16 nicht notwendigerweise eben bezüglich der Zeichenebene der FIG 5 sein müssen, sondern eine Krümmung aufweisen können, die an eine etwaige Krümmung des Wagenkastens 6 im Bereich der Einstiegstür 4 angepasst ist.

Anders als der Portaldichtrahmen 14 des vorhergehenden Ausführungsbeispiels weist der Portaldichtrahmen 14 aus FIG 5 nur ein einziges Schmalseitenteil 18 auf. Das heißt, dem Portaldichtrahmen 14 aus FIG 5 fehlt das untere Schmalseitenteil 18. Ansonsten sind die beiden Portaldichtrahmen 14 gleich ausgebildet.

An ihrer Unterseite wird die Einstiegstür 4 des Schienenfahrzeugs 44 mittels einer separat am Wagenkasten 6 montierten (figürlich nicht dargestellten) Trittleiste abgedichtet.

Auch im vorliegenden Ausführungsbeispiel sind die Seitenteile 16, 18 des Portaldichtrahmens 14 ausschließlich mittels einer Klebeverbindung mit dem Türportal 12 des Schienenfahrzeugs 44 verbunden.

Obwohl die Erfindung im Detail durch die bevorzugten Ausführungsbeispiele näher illustriert und beschrieben wurde, ist die Erfindung nicht durch die offenbarten Beispiele eingeschränkt und andere Variationen im Rahmen der Ansprüche können hieraus abgeleitet werden, ohne den Schutzumfang der Erfindung zu verlassen.

## Patentansprüche

1. Fahrzeug (2, 44), welches ein Türportal (12) sowie einen mit dem Türportal (12) verbundenen Portaldichtrahmen (14) umfasst, der mehrere miteinander verbundene Seitenteile (16, 18) aufweist, wobei mindestens eins der Seitenteile (16, 18) des Portaldichtrahmens (14) mittels einer Klebeverbindung mit dem Türportal (12) verbunden ist, und wobei jedes der Seitenteile (16, 18) mehrere Aussparungen (38) zur Verringerung seiner Steifigkeit aufweist.

2. Fahrzeug (2, 44) nach Anspruch 1,
**dadurch gekennzeichnet, dass** jedes der Seitenteile (16, 18) des Portaldichtrahmens (14) mittels einer Klebeverbindung mit dem Türportal (12) verbunden ist.

3. Fahrzeug (2, 44) nach Anspruch 1 oder 2,
**dadurch gekennzeichnet, dass** der Portaldichtrahmen (14) zwei Längsseitenteile (16) sowie mindestens ein mit den Längsseitenteilen (16) verbundenes Schmalseitenteil (18) aufweist, wobei das Schmalseitenteil (18) an einem seiner beiden Enden mit einem der beiden Längsseitenteile (16) und an dem anderen der seiner beiden Enden mit dem anderen der beiden Längsseitenteile (16) verbunden ist.

4. Fahrzeug (2, 44) nach einem der vorhergehenden Ansprüche, **dadurch gekennzeichnet, dass** die Seitenteile (16, 18) des Portaldichtrahmens (14) zumindest überwiegend aus Metall, insbesondere aus Aluminium, bestehen.

5. Fahrzeug (2, 44) nach einem der vorhergehenden Ansprüche, **dadurch gekennzeichnet, dass** die Seitenteile (16, 18) des Portaldichtrahmens (14) jeweils als Profilbauteil oder als Blechkantteil ausgebildet sind.

6. Fahrzeug (2, 44) nach einem der vorhergehenden Ansprüche,
**dadurch gekennzeichnet, dass** die Seitenteile (16, 18) des Portaldichtrahmens (14) jeweils eine Befestigungsleiste (20) sowie eine mit der Befestigungsleiste (20) verbundene Dichtleiste (22) aufweisen.

7. Fahrzeug (2, 44) nach Anspruch 6,
**dadurch gekennzeichnet** jedes der Seitenteile (16, 18) an seiner Befestigungsleiste (20) mit dem Türportal (12) verbunden ist und die Dichtleiste (22) des jeweiligen Seitenteils (16, 18) senkrecht oder im Wesentlichen senkrecht zu dessen Befestigungsleiste (20) angeordnet ist.

8. Fahrzeug (2, 44) nach einem der vorhergehenden Ansprüche,
**dadurch gekennzeichnet, dass** die Seitenteile (16, 18) des Portaldichtrahmens (14) jeweils eine L-förmige oder eine T-förmige Querschnittsform aufweisen.

9. Fahrzeug (2, 44) nach einem der vorhergehenden Ansprüche,
**dadurch gekennzeichnet, dass** die Seitenteile (16, 18) des Portaldichtrahmens (14) eine Wandungsdicke (d) von höchstens 5 mm, insbesondere höchstens 3 mm, aufweisen.

10. Fahrzeug (2, 44) nach einem der vorhergehenden Ansprüche,
**dadurch gekennzeichnet, dass** die Aussparungen (38) als Schlitze ausgebildet sind.

11. Fahrzeug (2, 44) nach einem der vorhergehenden Ansprüche,
**dadurch gekennzeichnet, dass** die Aussparungen (38) des jeweiligen Seitenteils (16, 18) in dessen Längsrichtung (40, 42) nebeneinander angeordnet sind.

12. Fahrzeug (2, 44) nach einem der vorhergehenden Ansprüche, **gekennzeichnet durch** eine Einstiegstür (4), welche mindestens einen Türflügel (8) sowie mindestens ein an dem Türflügel (8) befestigtes Dichtungselement (28) mit einer Dichtlippe (30) aufweist, wobei die Dichtlippe (30) im geschlossenen Zustand der Einstiegstür (4) zumindest abschnittweise am Portaldichtrahmen (14) anliegt.

13. Fahrzeug (2, 44) nach Anspruch 12,
**dadurch gekennzeichnet, dass** die Einstiegstür (4) als Schwenkschiebetür ausgebildet ist.

14. Verfahren zum Befestigen eines Portaldichtrahmens (14) an einem Türportal (12) eines Fahrzeugs (2, 44), bei dem der Portaldichtrahmen (14) mehrere miteinander verbundene Seitenteile (16, 18) aufweist, wobei mindestens eins der Seitenteile (16, 18) des Portaldichtrahmens (14) mittels einer Klebeverbindung mit dem Türportal (12) verbunden wird, und wobei jedes der Seitenteile (16, 18) mehrere Aussparungen (38) zur Verringerung seiner Steifigkeit aufweist.

## Claims

1. Vehicle (2, 44) which comprises a door portal (12) and a portal sealing frame (14) which is connected to the door portal (12) and has a plurality of interconnected side parts (16, 18), wherein at least one of the side parts (16, 18) of the portal sealing frame (14) is connected to the door portal (12) by means of an adhesive bond, and wherein each of the side parts (16, 18) has a plurality of recesses (38) for reducing its rigidity.

2. Vehicle (2, 44) according to Claim 1,
**characterized in that** each of the side parts (16, 18) of the portal sealing frame (14) is connected to the door portal (12) by means of an adhesive bond.

3. Vehicle (2, 44) according to Claim 1 or 2,
**characterized in that** the portal sealing frame (14) has two longitudinal side parts (16) and at least one narrow side part (18) which is connected to the longitudinal side parts (16), wherein the narrow side part (18) is connected at one of its two ends to one of the two longitudinal side parts (16) and at the other of its two ends to the other of the two longitudinal side parts (16).

4. Vehicle (2, 44) according to one of the preceding claims, **characterized in that** the side parts (16, 18) of the portal sealing frame (14) are at least predominantly composed of metal, in particular of aluminium.

5. Vehicle (2, 44) according to one of the preceding claims, **characterized in that** the side parts (16, 18) of the portal sealing frame (14) are each designed as a profile component or as a bevelled sheet metal part.

6. Vehicle (2, 44) according to one of the preceding claims, **characterized in that** the side parts (16, 18) of the portal sealing frame (14) each have a fastening strip (20) and a sealing strip (22) which is connected to the fastening strip (20) .

7. Vehicle (2, 44) according to Claim 6,
**characterized in that** each of the side parts (16, 18) is connected at its fastening strip (20) to the door portal (12), and the sealing strip (22) of the respective side part (16, 18) is arranged perpendicularly or substantially perpendicularly to the fastening strip (20) thereof.

8. Vehicle (2, 44) according to one of the preceding claims, **characterized in that** the side parts (16, 18) of the portal sealing frame (14) each have an L-shaped or a T-shaped crosssectional form.

9. Vehicle (2, 44) according to one of the preceding claims, **characterized in that** the side parts (16, 18) of the portal sealing frame (14) have a wall thickness (d) of at most 5 mm, in particular at most 3 mm.

10. Vehicle (2, 44) according to one of the preceding claims, **characterized in that** the recesses (38) are designed as slots.

11. Vehicle (2, 44) according to one of the preceding claims, **characterized in that** the recesses (38) of the respective side part (16, 18) are arranged next to one another in the longitudinal direction (40, 42) thereof.

12. Vehicle (2, 44) according to one of the preceding claims, **characterized by** an entry door (4) which has at least one door leaf (8) and at least one sealing element (28) which is fastened to the door leaf (8) and has a sealing lip (30), wherein the sealing lip (30) lies at least in sections against the portal sealing frame (14) in the closed state of the entry door (4).

13. Vehicle (2, 44) according to Claim 12,
**characterized in that** the entry door (4) is designed as a pivoting and sliding door.

14. Method for fastening a portal sealing frame (14) to a door portal (12) of a vehicle (2, 44), in which the portal sealing frame (14) has a plurality of interconnected side parts (16, 18), wherein at least one of the side parts (16, 18) of the portal sealing frame (14) is connected to the door portal (12) by means of an adhesive bond, and wherein each of the side parts (16, 18) has a plurality of recesses (38) for reducing its rigidity.

## Revendications

1. Véhicule (2, 44), qui a un portique (12) de porte ainsi qu'un cadre (14) d'étanchéité de portique relié au portique (12) de porte, qui a plusieurs parties (16, 18) latérales reliées entre elles,
dans lequel au moins l'une des parties (16, 18) latérales du cadre (14) d'étanchéité de portique est reliée au moyen d'un collage au portique (12) de porte et dans lequel chacune des parties (16, 18) latérales a plusieurs évidements (38) pour diminuer sa rigidité.

2. Véhicule (2, 44) suivant la revendication 1,
**caractérisé en ce que** chacune des parties (16, 18) latérales du cadre (14) d'étanchéité de portique est reliée au moyen d'un collage au portique (12) de porte.

3. Véhicule (2, 44) suivant la revendication 1 ou 2,
**caractérisé en ce que** le cadre (14) d'étanchéité de portique a deux parties (16) latérales longitudinales ainsi qu'au moins une partie (18) latérale étroite reliée aux parties (16) latérales longitudinales, dans lequel la partie (18) latérale étroite est reliée à l'une de ses deux extrémités à l'une des deux parties (16) latérales longitudinales et à l'autre de ses deux extrémités à l'autre des deux parties (16) latérales longitudinales.

4. Véhicule (2, 44) suivant l'une des revendications précédentes, **caractérisé en ce que** les parties (16, 18) latérales du cadre (14) d'étanchéité de portique sont au moins d'une manière prépondérante en métal, notamment en aluminium.

5. Véhicule (2, 44) suivant l'une des revendications précédentes, **caractérisé en ce que** les parties (16, 18) latérales du cadre (14) d'étanchéité de portique sont constituées chacune sous la forme d'une pièce profilée ou d'une partie à arête de tôle.

6. Véhicule (2, 44) suivant l'une des revendications précédentes, **caractérisé en ce que** les parties (16, 18) latérales du cadre (14) d'étanchéité de portique ont chacune une réglette (20) de fixation ainsi qu'une réglette (22) d'étanchéité reliée à la réglette (20) de fixation.

7. Véhicule (2, 44) suivant la revendication 6,
**caractérisé en ce que** chacune des parties (16, 18) latérales est reliée sur sa baguette (20) de fixation au portique (12) de porte et la baguette (22) d'étanchéité de la partie (16, 18) latérale respective est disposée perpendiculairement ou sensiblement perpendiculairement à sa baguette (20) de fixation.

8. Véhicule (2, 44) suivant l'une des revendications précédentes, **caractérisé en ce que** les parties (16, 18) latérales du cadre (14) d'étanchéité de portique ont chacune une forme de section transversale en L ou en T.

9. Véhicule (2, 44) suivant l'une des revendications précédentes, **caractérisé en ce que** les parties (16, 18) latérales du cadre (14) d'étanchéité de portique ont une épaisseur (d) de paroi de 5 mm au plus, notamment de 3 mm au plus.

10. Véhicule (2, 44) suivant l'une des revendications précédentes, **caractérisé en ce que** les évidements (38) sont constitués sous forme de fentes.

11. Véhicule (2, 44) suivant l'une des revendications précédentes, **caractérisé en ce que** les évidements (38) de la partie (16, 18) latérale respective sont disposés les uns à côté des autres dans sa direction (40, 42) longitudinal.

12. Véhicule (2, 44) suivant l'une des revendications précédentes, **caractérisé par** une porte (4) d'accès, qui a au moins un battant (8) de porte ainsi qu'au moins un élément (28) d'étanchéité fixé au battant (8) de porte et ayant une lèvre (30) d'étanchéité, dans lequel la lèvre (30) d'étanchéité s'applique, lorsque la porte (4) d'accès est à l'état fermé, au moins par endroit au cadre (14) d'étanchéité de portique.

13. Véhicule (2, 44) suivant la revendication 12,
**caractérisé en ce que** la porte (4) d'accès est constituée sous la forme d'une porte louvoyante-coulissante.

14. Procédé de fixation d'un cadre (14) d'étanchéité de portique à un portique (12) de porte d'un véhicule (2, 44) dans lequel le cadre (14) d'étanchéité de portique a plusieurs parties (16, 18) latérales reliées entre elles, dans lequel on relie au moins l'une des parties (16, 18) latérales du cadre (14) d'étanchéité de portique au moyen d'un collage au portique (12) de porte et dans lequel chacune des parties (16, 18) latérales a plusieurs évidements (38) pour en diminuer la rigidité.
